# EUROPEAN PATENT APPLICATION

(11) **EP 4 707 059 A1**
(43) Date of publication of application: **11.03.2026**
(21) Application number: 25192281.1
(22) Date of filing: 28.07.2025
(51) Int. Cl.: B60L 53/66, B60L 53/80

(54) **BATTERY SWAP MANAGEMENT METHOD AND BATTERY ENERGY STATION THEREOF**

(30) Priority: 21.08.2024 TW 113131447
(71) Applicant: Kwang Yang Motor Co., Ltd., Kaohsiung City (TW)
(72) Inventor: WU, WEI-SHENG, Kaohsiung (TW); HUNG, YU-SZU, Kaohsiung (TW); KUO CHANG, HUNG-SHENG, Kaohsiung (TW)
(74) Representative: Cabinet Chaillot

(57) **Abstract**

A battery swap management method, for use in a battery energy station for storing and charging a plurality of candidate batteries and an electric vehicle, is provided. Initially, the electric vehicle connects to the energy station through a wireless network. Next, the electric vehicle obtains a specific battery's specific battery level and transmits the specific battery level to the battery energy station through the wireless network. Then, the battery energy station obtains each candidate battery's candidate battery level, and determines whether the candidate battery's candidate battery level is lower than the specific battery's specific battery level. Lastly, when each candidate battery's candidate battery level is lower than the specific battery's specific battery level, the battery energy station sends an unswappable instruction to the electric vehicle through the wireless network.

## Description

### 1. Field of the Invention

The present invention relates to a battery swap management method and a battery energy station thereof, and more particularly to a management method that receives electric vehicle information through a wireless network to provide early battery swap reminders and a battery energy station thereof.

### 2. Description of Related Art

In recent years, with the rise of environmental awareness and advancements of electric vehicle technology, developments of electric vehicles powered by electricity to replace traditional vehicles powered by fossil fuels have gradually become an important goal in automotive field, making electric vehicles (EVs) more and more popular. In order to increase the range and willingness of using EVs, many countries or cities have begun to plan to set up EV charging stations and battery energy stations in public places to provide EVs and/or electric scooters for charging or battery replacement, making the use of electric vehicles more convenient.

Encouraged by government subsidies, many people have begun trying to buy and to use EVs as a means of transportation. Generally speaking, traditional fuel vehicles are refueled only after gasoline is almost used up. Since refueling time is short, a time spent on refueling does not affect a user's overall driving plan. However, for EVs, there are technological limitations on a battery supply and charging of the EV. When riding the EV, the user must always pay attention to the battery status of the EV so as to charge it in time before a battery charge is used up.

Due to a current limited availability of EV charging stations and electric battery stations, when users need to charge or replace the battery of their vehicles, such as EVs or electric scooters, they must stop the vehicle and open a mobile phone application to find a nearby EV charging station or battery energy station. During some peak traffic hours, for commuters, if a more convenient battery charging or swap mechanism can be provided, a more efficient and faster battery swap mechanism will bring higher user satisfaction.

In view of this, the present invention provides a battery swap management method and a battery energy station thereof.

The battery swap management method is adapted to a battery energy station for storing and charging a plurality of candidate batteries and an electric vehicle. First, the electric vehicle connects to the battery energy station through a wireless network. Next, the electric vehicle obtains a specific battery level corresponding to a specific battery and transmits the specific battery level corresponding to the specific battery to the battery energy station through the wireless network. Then, the battery energy station receives a respective candidate battery level corresponding to each of the candidate batteries, and determines whether all of the candidate battery levels corresponding to the candidate batteries are lower than the specific battery level corresponding to the specific battery. Lastly, when all of the candidate battery levels corresponding to the candidate batteries are lower than the specific battery level corresponding to the specific battery, the battery energy station transmits an unswappable instruction to the electric vehicle through the wireless network.

The battery energy station includes a network connection unit, a battery storage unit, and a processing unit. The battery storage unit stores and charges multiple candidate batteries. The processing unit is electrically connected to the battery storage unit and the network connection unit. Moreover, the processing unit connects to an electric vehicle through the wireless network via the network connection unit, and receives a specific battery level corresponding to a specific battery from the electric vehicle through the wireless network. Furthermore, the processing unit obtains a respective candidate battery level corresponding to each of the candidate batteries, and determines whether all of the candidate battery levels corresponding to the candidate batteries are lower than the specific battery level corresponding to the specific battery. When all of the candidate battery levels corresponding to the candidate batteries are lower than the specific battery level corresponding to the specific battery, the processing unit transmits the unswappable instruction to the electric vehicle through the wireless network.

In some embodiments, the electric vehicle determines whether a specific condition on the electric vehicle is triggered. When the specific condition is triggered, the electric vehicle obtains the specific battery level corresponding to the specific battery, and transmits the specific battery level corresponding to the specific battery to the battery energy station.

In some embodiments, the electric vehicle determines whether a storage cover for storing at least one specific battery in the electric vehicle is opened. When the storage cover for storing the specific battery in the electric vehicle is opened, the electric vehicle obtains the specific battery level corresponding to the specific battery, and transmits the specific battery level corresponding to the specific battery to the battery energy station.

In some embodiments, when any of the candidate battery levels corresponding to the candidate batteries is greater than the specific battery level corresponding to the specific battery, the processing unit receives a battery swap instruction, where the battery swap instruction includes a user data record. Furthermore, corresponding to the battery swap instruction, the processing unit selects at least one target battery from the candidate batteries, and writes the user data record to the target battery. Moreover, the candidate battery level corresponding to the target battery is greater than the specific battery level corresponding to the specific battery, and the target battery selected by the processing unit is limited to be swapped by the specific battery having the user data record.

In some embodiments, the processing unit further determines whether the specific battery is received. When the battery energy station receives the specific battery, the processing unit provides the target battery by executing a battery swap procedure.

In some embodiments, the electric vehicle transmits the battery swap instruction through the wireless network.

In some embodiments, the battery energy station determines whether a mobile device or an electric vehicle of a corresponding user data record is located within a specified area of the battery energy station. When the mobile device or the electric vehicle is within the specified area of the battery energy station, the battery energy station receives the battery swap instruction.

In some embodiments, a remote server receives a location of a mobile device or an electric vehicle of a corresponding user data record through a network. The remote server determines whether the mobile device or the electric vehicle has remained stationary within a specified area of the battery energy station for a specified period. When the mobile device or the electric vehicle has remained stationary within a specified area of a battery energy station for a specified period, the remote server transmits a battery swap instruction to the battery energy station through the network.

The above method of the present invention may exist in the form of program code. When the program code is loaded and executed by a machine, the machine becomes an apparatus for participating in the present invention.

In order to make the above objects, features and advantages of the present invention more clearly understandable, the following embodiments are specifically cited and described in detail with the accompanying drawings.
In the drawings:
Fig. 1 is a schematic diagram of one embodiment of a battery energy station of the present invention.
Fig. 2 is a schematic diagram of another embodiment of the battery energy station of the present invention.
Fig. 3 is a schematic diagram of the other embodiment of the battery energy station of the present invention.
Fig. 4 is a flow diagram of one embodiment of a battery swap management method of the present invention.
Fig. 5 is a flow diagram of another embodiment of the battery swap management method of the present invention.
Fig. 6 is a flow diagram of the other embodiment of the battery swap management method of the present invention.
Fig. 7 is a flow diagram of one embodiment of a method of obtaining a battery swap instruction.
Fig. 8 is a flow diagram of another embodiment of the method of obtaining the battery swap instruction.

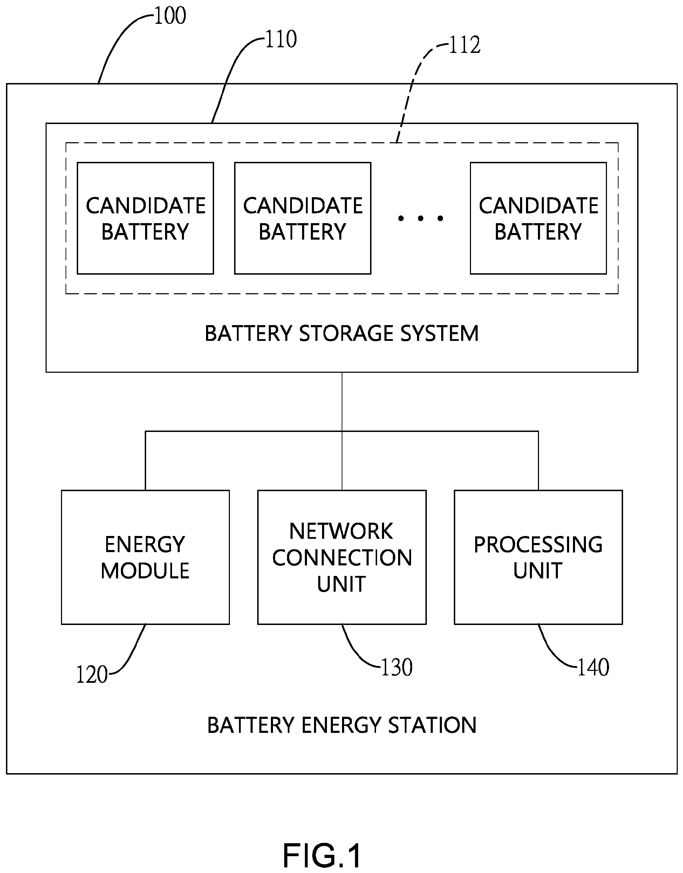

With reference to Fig. 1, Fig. 1 is a schematic diagram of one embodiment of a battery energy station of the present invention. The battery energy station 100 can be an electronic device. As shown in Fig. 1, the battery energy station 100 includes a battery storage system 110, an energy module 120, a network connection unit 130, and a processing unit 140. The battery storage system 110 includes a specific mechanism (not shown in the figure) for storing a plurality of candidate batteries 112, and selectivity locking and releasing the candidate batteries 112. Additionally, the battery storage system 110 can provide the candidate batteries 112 for consumption by at least one electrical device, such as electric vehicles, including electric scooters or electric cars. The energy module 120 is electrically connected to a power grid (not shown in the figure) for drawing a total current to supply the electricity needs of the battery energy station 100, and the energy module 120 can charge the candidate batteries 112 based on a signal from the processing unit 140. It must be stated that, the battery storage system 110 can include a respective charging module corresponding to each candidate battery 112. The charging module includes a charging current between an upper limit current and a lower limit current to charge the corresponding candidate battery 112. It is worth noting that, in some embodiments, the energy module 120 can actively detect the total current from the power grid supplying the battery energy station 100, and notifies an information corresponding to the total current to the processing unit 140. The network connection unit 130 connects to a network, thus enabling the battery energy station 100 to have a capability of network connection. In some embodiments, the network may include a wired network, a telecommunications network, or a wireless network, such as a Wi-Fi network. The processing unit 140 can control the operation of all hardware and all software in the battery energy station 100, and execute a battery swap management method of the present invention. A more detailed explanation of the control and the execution will be presented in a subsequent section.

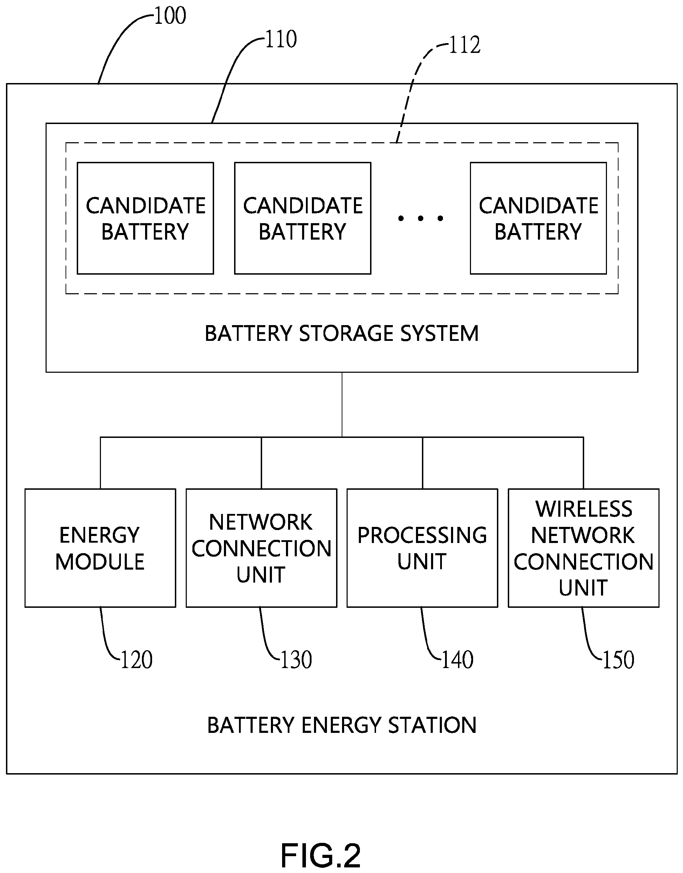

With reference to Fig. 2, Fig. 2 is a schematic diagram of another embodiment of the battery energy station 100 of the present invention. The battery energy station 100 can be an electronic device. As shown in Fig. 2, the battery energy station 100 includes the battery storage system 110, the energy module 120, the network connection unit 130, the processing unit 140, and a wireless network connection unit 130. Similarly, the battery storage system 110 includes the specific mechanism (not shown in the figure) for storing the plurality of candidate batteries 112, and selectivity locking and releasing the candidate batteries 112. Additionally, the battery storage system 110 can provide the candidate batteries 112 for consumption by at least one electrical device, such as electric vehicles, including electric scooters or electric cars. The energy module 120 is electrically connected to the power grid (not shown in the figure) for drawing the total current to supply the electricity needs of the battery energy station 100, and the energy module 120 can charge the candidate batteries 112 based on the signal from the processing unit 140. It must be stated that, the battery storage system 110 can include the charging module corresponding to each candidate battery 112. The charging module includes the charging current between the upper limit current and the lower limit current to charge the corresponding candidate battery 112. It is worth noting that, in some embodiments, the energy module 120 can actively detect the total current from the power grid supplying the battery energy station 100, and notifies the information corresponding to the total current to the processing unit 140. The network connection unit 130 connects to the network, thus enabling the battery energy station 100 to have the capability of network connection. **In** some embodiments, the network may include the wired network, the telecommunications network, or the wireless network, such as the Wi-Fi network. The processing unit 140 can control the operation of all hardware and all software in the battery energy station 100, and execute the battery swap management method of the present invention. A more detailed explanation of the control and the execution will be presented in a subsequent section. The wireless network connection unit 150 can actively or passively detect a wireless communication network, including a Bluetooth network or a Wi-Fi network, and connects to an electronic device, such as a mobile device or a vehicle controller of an electric vehicle of the user, through the wireless network.

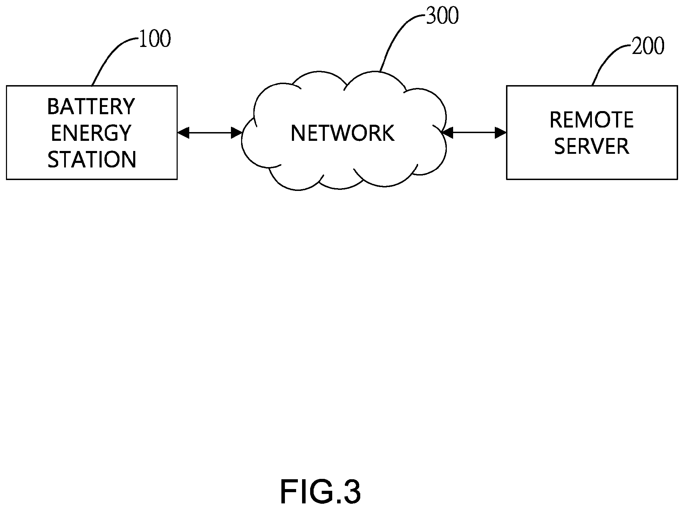

With reference to Fig. 3, Fig. 3 is a schematic diagram of another embodiment of the battery energy station 100 of the present invention. Similarly, the battery energy station 100 can be an electronic device, including the plurality of candidate batteries 112, and providing the candidate batteries 112 for consumption by at least one electrical device, such as electric vehicles, including electric scooters or electric cars. The battery energy station 100 can include components similar to those shown in Fig. 1 or Fig. 2, so the details of which will not be reiterated here. The battery energy station 100 can connect to a remote server 200 through a network 300 via the network connection unit 130. The network 300 includes at least one of the following: the wired network, the telecommunications network, or the wireless network, such as the Wi-Fi network. It is worth noting that, in some embodiments, the remote server 200 can simultaneously manage other battery energy stations 100 located at the same, or different, locations. As mentioned before, the energy module 120 can actively detect the total current from the power grid supplying to the battery energy station 100, and notifies the information corresponding to the total current to the processing unit 140. In some embodiments, the remote server 200 can also notify the information corresponding to the total current to the battery energy station 100 through the network 300. In some embodiments, the remote server 200 can also transmit information related to different time periods, such as peak hours and off-peak hours, to the battery energy station 100 through the network 300. Thus, the battery energy station 100 can perform related tasks based on the information received from the remote server 200.

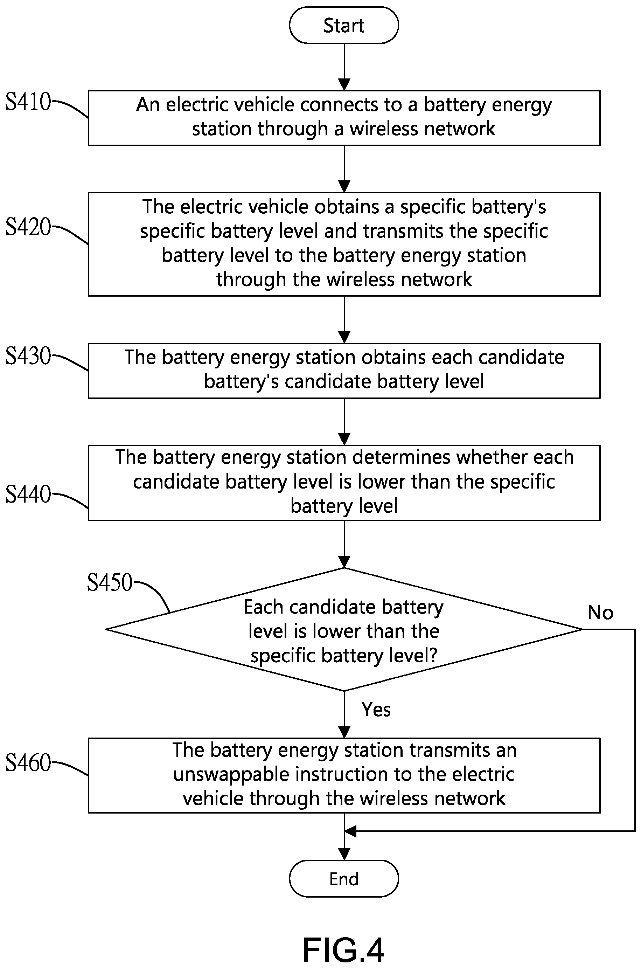

With reference to Fig. 4, Fig. 4 is a flow diagram of one embodiment of the battery swap management method of the present invention. The battery swap management method is for use in the battery energy station 100 for storing and charging the plurality of candidate batteries 112, as shown in Fig. 1 or Fig. 2, and an electric vehicle.

First, as in step S410, the electric vehicle connects to the battery energy station through a wireless network, including a Bluetooth network or a Wi-Fi network. Next, as in step S420, the electric vehicle obtains a specific battery level corresponding to a specific battery and transmits the specific battery level corresponding to the specific battery to the battery energy station 100 through the wireless network. Then, as in step S430, the battery energy station 100 receives a respective candidate battery level corresponding to each of the candidate batteries 112. After that, as in step S440, the battery energy station 100 determines whether all of the candidate battery levels corresponding to each candidate battery 112 are lower than the specific battery level corresponding to the specific battery. Afterwards, as in step S450, when all of the candidate battery levels corresponding to the candidate batteries 112 are greater than the specific battery level corresponding to the specific battery, the process terminates. In contrast, when all of the candidate battery levels corresponding to the candidate batteries 112 are lower than the specific battery level corresponding to the specific battery, then as in step S460, the battery energy station 100 transmits an unswappable instruction to the electric vehicle through the wireless network. In other words, when all of the candidate battery levels corresponding to the candidate batteries 112 in the battery energy station 100 are lower than the specific battery level corresponding to the specific battery, the battery energy station 100 can notify users of this situation in advance before the user arrives at the battery energy station 100 for battery swap, and instead, going to other battery energy stations 100 for battery swap.

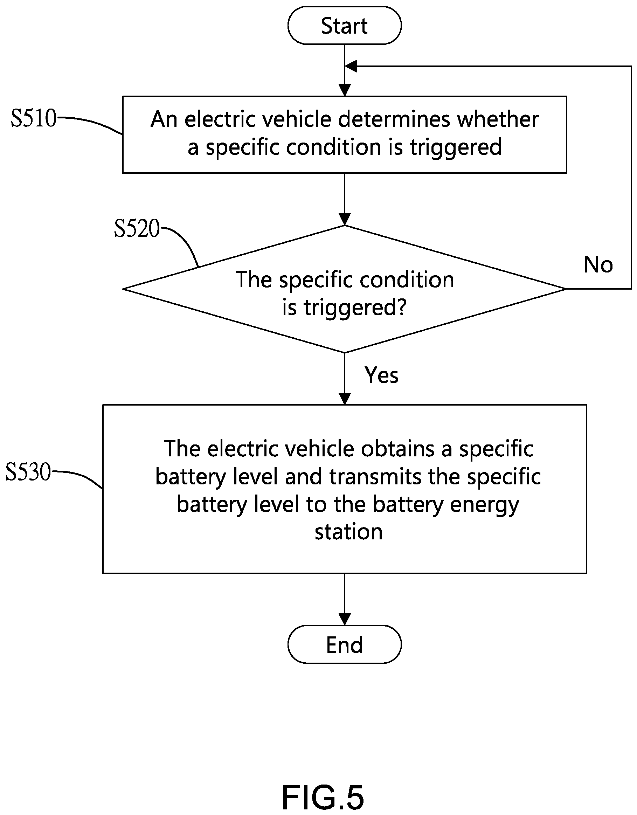

With reference to Fig. 5, Fig. 5 is a flow diagram of another embodiment of the battery swap management method of the present invention. As in step S510, the electric vehicle determines whether a specific condition is triggered. As in step S520, if the specific condition is not triggered, return to step S510. In contrast, if the specific condition is triggered, then as in step S530, the electric vehicle obtains the specific battery level corresponding to the specific battery and transmits the specific battery level corresponding to the specific battery to the battery energy station 100. It is worth noting that, in some embodiments, the step of determining whether the specific condition is triggered including whether a storage cover for storing the specific battery in the electric vehicle is opened. When the storage cover for storing the specific battery in the electric vehicle is opened, the electric vehicle obtains the specific battery level corresponding to the specific battery and transmits the specific battery level corresponding to the specific battery to the battery energy station 100. It should be pointed out that, the above specific conditions are embodiments for the present invention, and not limited to this.

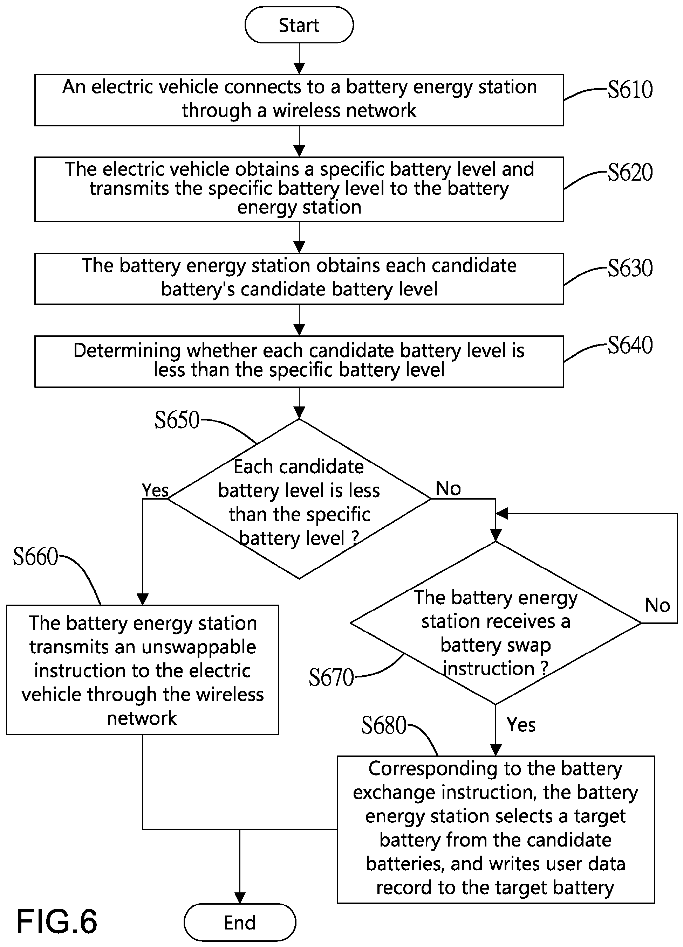

With reference to Fig. 6, Fig. 6 is a flow diagram of another embodiment of the battery swap management method of the present invention. The battery swap management method is adapted to the battery energy station 100 for storing and charging the plurality of candidate batteries 112, as shown in Fig. 1 or Fig. 2, and the electric vehicle.

First, as in step S610, the electric vehicle connects to the battery energy station through a wireless network, including a Bluetooth network or a Wi-Fi network. Next, as in step S620, the electric vehicle obtains a specific battery level corresponding to a specific battery and transmits the specific battery level corresponding to the specific battery to the battery energy station 100 through the wireless network. Similarly, in some embodiments, the electric vehicle determines whether a specific condition is triggered. When the specific condition is triggered, the electric vehicle obtains the specific battery level corresponding to the specific battery and transmits the specific battery level corresponding to the specific battery to the battery energy station 100. Furthermore, in some embodiments, the step of determining whether the specific condition is triggered including whether a storage cover for storing the specific battery in the electric vehicle is opened. When the storage cover for storing the specific battery in the electric vehicle is opened, the electric vehicle obtains the specific battery level corresponding to the specific battery and transmits the specific battery level corresponding to the specific battery to the battery energy station 100. It should be pointed out that, the above specific conditions are embodiments for the present invention, and not limited to this.

Next, as in step S630, the battery energy station 100 obtains a respective candidate battery level corresponding to each of the candidate batteries 112, and as in step S640, the battery energy station 100 determines whether all of the candidate battery levels corresponding to the candidate batteries 112 are lower than the specific battery level corresponding to the specific battery.

As in step S650, when all of the candidate battery levels corresponding to the candidate batteries 112 are lower than the specific battery level corresponding to the specific battery, then as in step S660, the battery energy station 100 transmits the unswappable instruction to the electric vehicle through the wireless network. In contrast, when all of the candidate battery levels corresponding to the candidate batteries 112 are greater than the specific battery level corresponding to the specific battery, as in step S670, the battery energy station 100 determines whether the battery energy station 100 receives a battery swap instruction corresponding to the electric vehicle. It is worth noting that, the battery swap instruction can include a user data record corresponding to the electric vehicle or the specific battery.

If the battery energy station 100 fails to get the battery swap instruction from the electric vehicle, the battery energy station will return to step S670 and continue the determination. In contrast, if the battery energy station 100 receives the battery swap instruction from the electric vehicle, then as in step S680, corresponding to the battery swap instruction, the battery energy station 100 selects a target battery from the candidate batteries 112, and writes the user data record to the target battery. It is worth noting that, the candidate battery level corresponding to the target battery is greater than the specific battery level corresponding to the specific battery, and the selected target battery is limited to be swapped by the specific battery having the user data record. It should be pointed out that, in some embodiments, the processing unit 140 further determines whether the specific battery is received. When the battery energy station 100 receives the specific battery, the processing unit 140 provides the target battery for a battery swap. It is worth mentioning that, in some embodiments, while the battery energy station 100 receives the specific battery, the battery energy station 100 can simultaneously receive the battery swap instruction.

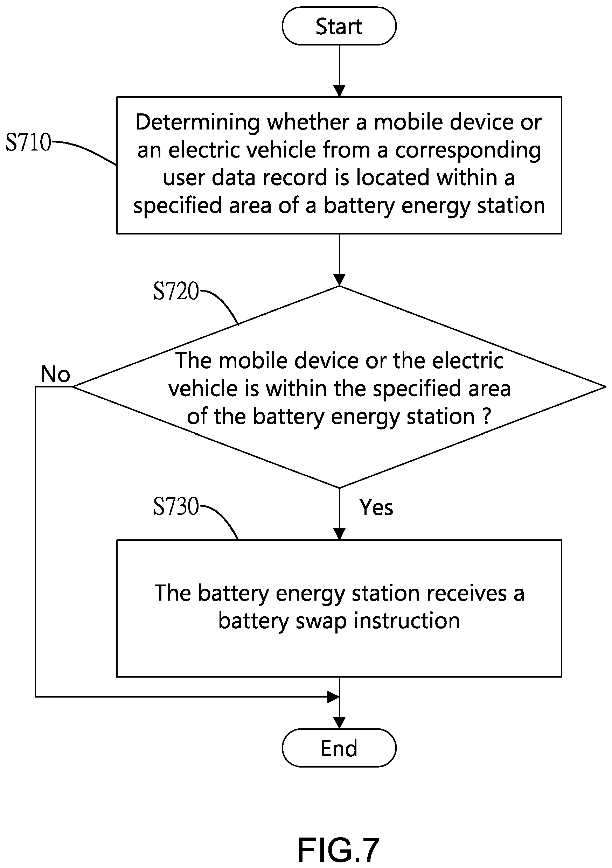

With reference to Fig. 7, Fig. 7 is a flow diagram of one embodiment of a method of obtaining the battery swap instruction.

First, as in step S710, the battery energy station 100 determines whether a mobile device or an electric vehicle corresponding to the user data record is located within a specified area of the battery energy station 100, such as in a 3-meter radius of the battery energy station 100. It should be pointed out that, the above specific conditions are embodiments for the present invention, and not limited to this.

As in step S720, when the mobile device or the electric vehicle is not within the specified area of the battery energy station 100, the process terminates. In contrast, when the mobile device or the electric vehicle is within the specified area of the battery energy station 100, then as in step S730, the battery energy station 100 receives the battery swap instruction. In other words, even if the user has not placed the specific battery in the battery energy station 100, if the user is near the battery energy station 100, the battery energy station 100 can start a process of selecting the target battery and writing the user data record in the battery swap process.

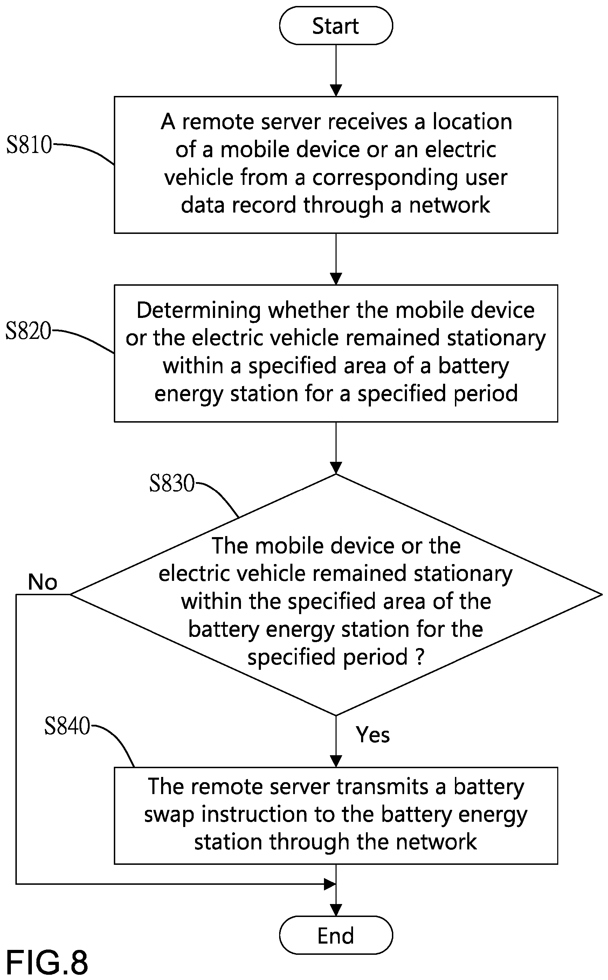

With reference to Fig. 8, Fig. 8 is a flow diagram of another embodiment of the method of obtaining the battery swap instruction.

First, as in step S810, a remote server 200 receives a location of a mobile device or an electric vehicle from a corresponding user data record through a network 300. Next, as in step S820, the remote server 200 determines whether the mobile device or the electric vehicle has remained stationary within a specified area of a battery energy station 100 for a specified period. Then, as in step S830, if the mobile device or the electric vehicle does not remain stationary within the specified area of the battery energy station 100 for the specified period, the process terminates. In contrast, if the mobile device or the electric vehicle has remained stationary within the specified area of the battery energy station 100 for the specified period, then as in step S840, the remote server 200 transmits the battery swap instruction to the battery energy station 100 through the network 300. In other words, even if the user has not placed the specific battery in the battery energy station 100, when the user is near the battery energy station 100, the remote server 200 can transmit the battery swap instruction to the battery energy station 100 through the network 300, and the battery energy station 100 can start the process of selecting the target battery and writing the user data record in the battery swap process.

Therefore, the battery swap management method and the battery energy station 100 thereof can receive electric vehicle information through the wireless network, including the battery level of the battery or the user data, for early reminder and management of battery swap, and for more efficient battery swap procedures.

The method of the present invention, or specific forms or portions thereof, may exist as program code. The program code may be contained in a physical medium, such as a floppy disk, CD-ROM, hard drive, or any other machine-readable (e.g., computer-readable) storage medium, or a computer program product not limited to its external form, wherein, when the program code is loaded and executed by a machine, such as a computer, this machine becomes an apparatus for participating in the present invention. The program code may also be transmitted via a transmission medium, such as a wire or cable, optical fiber, or any form of transmission, wherein, when the program code is received, loaded, and executed by a machine, such as a computer, this machine becomes an apparatus for participating in the present invention. When implemented in a general-purpose processing unit, the program code, in conjunction with the processing unit, provides a unique apparatus that operates similarly to application-specific logic circuits.

While the present invention has been disclosed as above with preferred embodiments, it is not intended to limit the present invention. Any person skilled in the art can make slight modifications and embellishments without departing from the spirit and scope of the present invention. Therefore, the protection scope of the present invention shall be defined by the appended claims.

## Claims

1. A battery swap management method, adapted to a battery energy station (100) for storing and charging a plurality of candidate batteries (112) and an electric vehicle, and **characterized in that** the battery swap management method comprises steps of:
connecting to the battery energy station (100) through a wireless network by the electric vehicle;
obtaining a specific battery level corresponding to a specific battery, and transmitting the specific battery level corresponding to the specific battery to the battery energy station (100) through the wireless network by the electric vehicle;
obtaining a respective candidate battery level corresponding to each of the candidate batteries (112), and determining whether all of the candidate battery levels corresponding to the candidate batteries (112) are lower than the specific battery level corresponding to the specific battery by the battery energy station (100); and
when all of the candidate battery levels corresponding to the candidate batteries (112) are lower than the specific battery level corresponding to the specific battery, transmitting an unswappable instruction to the electric vehicle through the wireless network by the battery energy station (100).

2. The battery swap management method as claimed in claim 1, further comprising steps of:
determining whether a specific condition on the electric vehicle is triggered by the electric vehicle; and
when the specific condition is triggered, obtaining the specific battery level corresponding to the specific battery, and transmitting the specific battery level corresponding to the specific battery to the battery energy station (100) by the electric vehicle.

3. The battery swap management method as claimed in claim 2, wherein, when the electric vehicle determines whether the specific condition on the electric vehicle is triggered, the electric vehicle determines whether a storage cover of the electric vehicle for storing the specific battery is opened; and
wherein, when the storage cover for storing the specific battery in the electric vehicle is opened, the electric vehicle obtains the specific battery level corresponding to the specific battery, and transmits the specific battery level corresponding to the specific battery to the battery energy station (100).

4. The battery swap management method as claimed in claim 1, further comprising steps of:
when any of the candidate battery levels corresponding to the candidate batteries (112) is greater than the specific battery level corresponding to the specific battery, receiving a battery swap instruction by the battery energy station (100); wherein, the battery swap instruction comprises a user data record; and
corresponding to the battery swap instruction, selecting at least one target battery from the candidate batteries (112), and writing the user data record to the at least one target battery by the battery energy station (100); and
wherein, the candidate battery level corresponding to the at least one target battery is greater than the specific battery level corresponding to the specific battery, and the at least one target battery selected by the battery energy station (100) is limited to be swapped by the specific battery having the user data record.

5. The battery swap management method as claimed in claim 4, further comprising steps of:
determining whether the specific battery is received by the battery energy station (100); and
when the battery energy station (100) receives the specific battery, providing the at least one target battery by executing a battery swap procedure by the battery energy station (100).

6. A battery energy station (100), **characterized in that** the battery energy station (100) comprises:
a network connection unit (130);
a battery storage unit (110), storing and charging multiple candidate batteries (112); and
a processing unit (140), electrically connected to the network connection unit (130) and the battery storage unit (110); wherein, the processing unit (140) connects to an electric vehicle through a wireless network via the network connection unit (130), receives a specific battery level corresponding to a specific battery from the electric vehicle through the wireless network, obtains a respective candidate battery level corresponding to each of the candidate batteries (112), and determines whether all of the candidate battery levels corresponding to the candidate batteries (112) are lower than the specific battery level corresponding to the specific battery;
wherein, when all of the candidate battery levels corresponding to the candidate batteries (112) are lower than the specific battery level corresponding to the specific battery, the processing unit (140) transmits an unswappable instruction to the electric vehicle through the wireless network.

7. The battery energy station (100) as claimed in claim 6, wherein, the electric vehicle determines whether a specific condition on the electric vehicle is triggered;
wherein, when the specific condition is triggered, the electric vehicle obtains the specific battery level corresponding to the specific battery, and transmits the specific battery level corresponding to the specific battery to the battery energy station (100).

8. The battery energy station (100) as claimed in claim 7, wherein, when the electric vehicle determines whether the specific condition on the electric vehicle is triggered, the electric vehicle determines whether a storage cover for storing the specific battery in the electric vehicle is opened; and
wherein, when the storage cover for storing the specific battery in the electric vehicle is opened, the electric vehicle obtains the specific battery level corresponding to the specific battery, and transmits the specific battery level corresponding to the specific battery to the battery energy station (100).

9. The battery energy station (100) as claimed in claim 6, wherein, when any of the candidate battery levels corresponding to the candidate batteries (112) is greater than the specific battery level corresponding to the specific battery, the processing unit (140) receives a battery swap instruction, wherein the battery swap instruction comprises a user data record;
wherein, the processing unit (140) corresponds to the battery swap instruction, selects at least one target battery from the candidate batteries (112), and writes the user data record to the at least one target battery; and
wherein, the candidate battery level corresponding to the at least one target battery is greater than the specific battery level corresponding to the specific battery, and the target battery selected by the processing unit (140) is limited to be swapped by the specific battery having the user data record.

10. The battery energy station (100) as claimed in claim 9, wherein, the processing unit (140) further determines whether the specific battery is received by the battery energy station (100); and
wherein, when the battery energy station (100) receives the specific battery, the processing unit (140) provides the at least one target battery by executing a battery swap procedure.
